# EUROPÄISCHE PATENTSCHRIFT

(11) **EP 2 865 447 B1**
(45) Veröffentlichungstag und Bekanntmachung des Hinweises auf die Patenterteilung: **23.03.2016**
(21) Anmeldenummer: 14188220.9
(22) Anmeldetag: 08.10.2014
(51) Int. Cl.: B05B 1/16, F16K 11/044, B05B 1/18

(54) **Handbrausenumstelleinheit für eine Sanitär- oder Küchenhandbrause**
Hand-held shower adjustment unit for sanitary or kitchen hand-held shower
Unité de conversion de douchette à main pour une douchette sanitaire ou de cuisine

(30) Priorität: 09.10.2013 DE 102013111173
(43) Veröffentlichungstag der Anmeldung: 29.04.2015
(73) Patentinhaber: Kludi GmbH & Co. KG, 58706 Menden (DE)
(72) Erfinder: Wiesendahl, Guido, 58099 Hagen (DE)
(74) Vertreter: Tarvenkorn, Oliver

(56) Entgegenhaltungen:
- WO-A1-2009/102455
- DE-A1-102010 024 963
- DE-U1- 8 204 732
- US-A1- 2006 124 773

## Beschreibung

Die Erfindung betrifft eine Handbrausenumstelleinheit für eine Sanitär- oder Küchenhandbrause mit wenigstens:
- einem Gehäuse mit einer Verteilerkammer, in der wenigstens ein Einlasskanal mündet und von der wenigstens ein erster Ausgangskanal und ein zweiter Ausgangskanal abzweigen;
- einem Umstellelement mit einer Achse und einem daran befestigten ringförmigen oder ringscheibenförmigen Formdichtungselement, welches in der Verteilerkammer zwischen einer ersten Position, in der der Einlasskanal mit dem ersten Ausgangskanal verbunden ist, und einer zweiten Position, in der der Einlasskanal mit dem zweiten Ausgangskanal verbunden ist, verschiebbar ist;
- einem Rückstellelement zur Rückführung des Umstellelements in eine Ausgangsposition; und
- einem Lagerelement zur Lagerung der Achse des Umstellelements in dem Gehäuse.

Eine Handbrausenumstelleinheit in einer Sanitär- oder Küchenhandbrause, die die Möglichkeit bietet, zwischen wenigstens zwei Strahlarten zu wählen, ist beispielsweise aus der WO 2009 102 455 A1 bekannt. Durch das Betätigen des Umstellelementes wird von einer ersten Strahlart, wie z.B. einem weichen Perlatorstrahl mit Luftbeimischung, zu einer zweiten Strahlart, beispielsweise einem Brausestrahl, umgestellt. Das Umstellelement trennt zwei mögliche Wasserwege, wobei stets ein Wasserweg geschlossen ist und der andere geöffnet ist. Durch das Betätigen des Umstellelements wechselt man die Zuweisung der Wasserwege.

Nachteilig an der bekannten Handbrausenumstelleinheit sind die aufwändige Fertigung aus mehreren Teilen und mögliche Probleme bei der Abdichtung: Das Umstellelement besitzt eine metallische Achse, die in einem Lagerelement geführt werden muss und die gegenüber dem Gehäuse über eine Ringdichtung abgedichtet werden muss. Dazu muss die Achse an ihrer Außenseite auch präzise zylindrisch und mit glatter Oberfläche gefertigt werden. Dringt Wasser in den Spalt ein, kommt es zur Korrosion oder Verkalkung und damit schnell zur Undichtigkeit und zum Funktionsausfall der Umschaltung. Da die bekannte Handbrausenumstelleinheit durch Herabdrücken des Achsendes am Umstellelement oder eines Betätigungselements, das indirekt darauf wirkt, betätigt wird, muss außerdem noch ein federndes Rückstellelement vorhanden sein, um das Umstellelement wieder in seine Ausgangsposition zurückzuführen, sobald der Benutzer das Betätigungselement los lässt. Damit sind mindestens eine Achse, ein Lagerteil dafür, eine Formdichtung für die eigentliche Fließwegumstellung, eine Dichtung für die Durchführung der Achse durch das Gehäuse sowie eine Druckfeder erforderlich. Um ein Verkanten der Achse zu vermeiden, sind in der Regel sogar zusätzlich noch zwei Lagerelemente notwendig und damit insgesamt nicht weniger als sechs Einzelteile, die zusätzlich zu den sonstigen Teilen der Handbrause nur für die Umstellung erforderlich sind.

In der DE 8204732 U1 ist ein umschaltbarer Brausekopf beschrieben, bei dem ebenfalls eine metallische Achse geführt, gelagert, abgedichtet und über eine Druckfeder zurückgestellt werden muss, so dass die genannten Nachteile auch hierbei bestehen.Das Gleiche gilt für eine Küchenarmatur mit Spülbrause, welche die US 2006/124773 A1 beschreibt. Die gesamte Umstelleinheit weist allein fünf Dichtringe zur Abdichtung gegenüber dem Gehäuse auf.

Die Aufgabe der vorliegenden Erfindung besteht darin, eine Handbrausenumstelleinheit so zu verbessern, dass sie einfacher zu fertigen ist und durch Schutz vor Verkalkung eine längere Lebensdauer besitzt.

Diese Aufgabe wird bei einer Handbrausenumstelleinheit mit den Merkmalen des Oberbegriffs des Anspruchs 1 dadurch gelöst:
- dass das Umstellerelement mit der Achse, dem Dichtungselement, dem Rückstellelement und dem Lagerelement einteilig aus einem elastomeres Werkstoff ausgebildet ist,
- dass das Lagerelement und das Rückstellelement am Umstellerelement durch ein die Achse umgebendes Membranelement gebildet ist, das in das Gehäuse eingespannt ist, und
- dass eine Betätigungsfläche, wie z.B. der Endabschnitt der Achse, als Betätigungsknopf aus dem Gehäuse ragt oder durch eine Öffnung im Gehäuse hindurch betätigbar ist.

Somit wird die bei der bekannten Handbrausenumstelleinheit noch aus zahlreichen Bauteilen bestehende Baugruppe erfindungsgemäß durch ein einziges Bauteil in Form des elastomeren Umstellelements ersetzt.

Das erfindungsgemäße Umstellelement besteht aus drei Bereichen, die alle Funktionen genauso erfüllen wie die zahlreichen Einzelbauteile bei der nach dem Stand der Technik bekannten Baugruppe:
- Das Membranelement übernimmt die Funktion der Rückstellfeder und besitzt gleichzeitig auch eine Dichtfunktion gegenüber dem Gehäuse.
- Die integrierte Achse ersetzt die Metallachse und braucht nicht zusätzlich gelagert zu werden. Damit besteht auch kein Ringspalt mehr, der abgedichtet werden muss bzw. durch den Wasser eindringen könnte.
- Das Formdichtungselement behält die Funktion als Formdichtung zur Umschaltung der Wasserwege.

Vorzugweise ist eine zusätzliche Zentriereinrichtung zwischen Gehäuse und Umstellelement ausgebildet, damit das Formdichtungselement präzise zwischen seinen beiden Dichtsitzen geführt wird und in den beiden Endlagen somit eine zuverlässige Abdichtung erreicht wird.

Die Zentrierung kann über einen an einer Zentrierausnehmung an der Unterseite des Umstellelements zentral eingreifenden Zapfen, der am Gehäuse angeformt ist, erfolgen. Die umgekehrte Anordnung mit einem Zapfen am unteren Ende der Achse des Umstellelements und einer Aufnahme dafür im Gehäuse ist ebenfalls möglich.

Außerdem kann eine Selbstzentrierung bereits über die oben angeformte Membran, welche zugleich die Rückstellkräfte hervorruft, erfolgen, indem diese durch eine feste und eventuell durch Rippen oder dergleichen verstärkte Struktur in beiden Stellungen eine Lage einnimmt, in der die Achse präzise gerade ausgerichtet ist.

Eine weitere Option der Zentrierung besteht darin, radiale Führungsstege am Umstellelement zwischen der Membran und dem Formdichtungselement vorzusehen, um innerhalb des im Gehäuse vorgesehenen Aufnahmeraums eine Führung des Umstellelementes durch Abstützung an der Innenwandung des Aufnahmeraums zu erreichen und ein Ausweichen des insbesondere doppelkegelförmigen Formdichtungselementes zur Seite hin zu vermeiden.

Die Erfindung wird nachfolgend mit weiteren vorteilhaften Ausgestaltungen anhand des in den Zeichnungen dargestellten Ausführungsbeispiels näher erläutert. Die Figuren zeigen im Einzelnen:
- Fig. 1: eine Handbrausenumstelleinheit in seitlicher Schnittansicht und
- Fig. 2: ein Umstellelement in Seitenansicht.

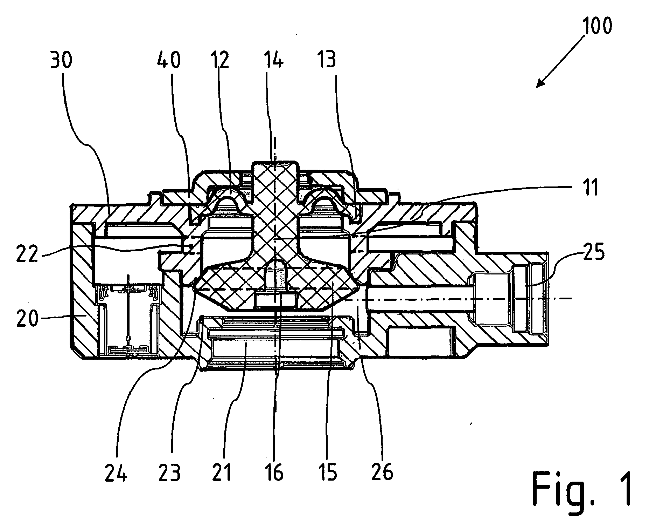

Figur 1 zeigt eine Handbrausenumstelleinheit 100, die auf einem Gehäusebasiselement 20 aufgebaut ist. Dieses kann integraler Bestandteiler einer Handbrause sein oder auch eine in sich abgeschlossene Einheit, die in eine Handbrause einsetzbar ist. In jedem Fall besitzt das Gehäusebasiselement 20 eine Verteilerkammer 26, in der wenigstens ein Einlasskanal 25 mündet und von der wenigstens ein erster Ausgangskanal 21 und ein zweiter Ausgangskanal 22 abzweigen.

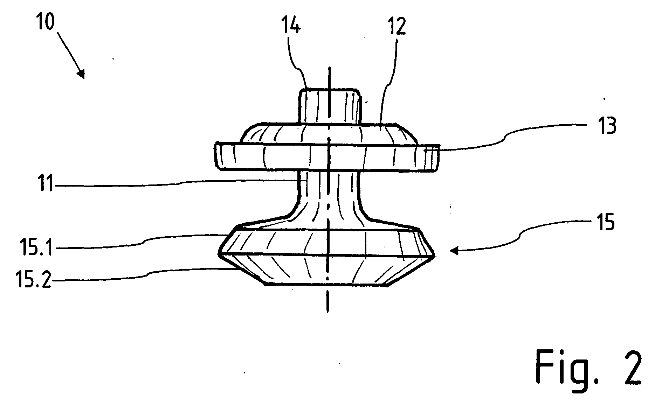

Ein in Figur 2 nochmals gesondert dargestelltes erfindungsgemäßes Umstellelement 10 ist einteilig aus einem elastomeren Werkstoff wie einem thermoplastischen Elastomer gebildet. Es besitzt eine Achse 11 und ein daran befestigtes ringförmiges oder ringscheibenförmiges Formdichtungselement 15, das zwei kegelabschnittsförmige Bereiche 15.1, 15.2 besitzt, die jeweils einem Dichtsitz 23, 24 im Gehäuse zugeordnet sind.

Das Formdichtungselement 15 ist in der Verteilerkammer 26 angeordnet und darin zwischen einer ersten Position an einem Dichtsitz 24, in der der Einlasskanal 25 mit dem ersten Ausgangskanal 21 verbunden ist, und einer zweiten Position an einem Dichtsitz 23, in der der Einlasskanal 25 mit dem zweiten Ausgangskanal 22 verbunden ist, verschiebbar ist.

Außerdem umfasst das Umstellelement 10 in einem oberen Bereich ein angeformtes Membranelement 12, das beim Niederdrücken des Umstellelements 10 umgestülpt wird, wodurch sich Rückstellkräfte aufbauen. Es dient daher auch als Rückstellelement zur Rückführung des Umstellelements 10 in eine Ausgangsposition. Außerdem dient der Außenrand der Membran 12, der wie die Schnittansicht in Figur 1 wiederum zeigt, durch einen Randsteg 13 verstärkt ist, als Lagerelement zur Lagerung des gesamten Umstellelements 10 in einem Deckelelement 30 des Gehäuses.

Das Gehäuse ist hier dreiteilig ausgebildet mit dem bereits genannten Gehäusebasiselement 20 und dem zusätzlichen Deckelelement 30, zwischen denen die Verteilerkammer 26 ausgebildet ist. Außerdem ist ein Klemmringelement 40 auf das Deckelelement 30 aufgesetzt. Zwischen dem Klemmringelement 40 und dem Deckelelement 30 ist der Randsteg 13 des Membranelements 12 eingespannt, eingeklebt oder eingeschweißt. Damit ist das Umstellelement 10 hermetisch gegenüber dem Deckelelement 30 abgedichtet und zugleich fest darin gelagert.

Auch das Gehäusebasiselement 20, das Deckelelement 30 und das Klemmringelement 40 sind vorzugsweise über ein Laserschweißverfahren miteinander verschweißt, so dass eine zuverlässige Dichtigkeit und hohe mechanische Festigkeit gegeben ist.

Jenseits des Membranelements 12 ragt ein Betätigungsknopf mit einer Betätigungsfläche 14 aus dem Gehäuse und/oder ist durch eine Öffnung im Gehäuse hindurch betätigbar, beispielsweise über ein außen in einem Handbrausengehäuse gelagertes Tastenelement.

## Patentansprüche

1. Handbrausenumstelleinheit (100) für eine Sanitär- oder Küchenhandbrause mit wenigstens:
- einem Gehäuse (20, 30, 40) mit einer Verteilerkammer (26), in der wenigstens ein Einlasskanal (25) mündet und von der wenigstens ein erster Ausgangskanal (21) und ein zweiter Ausgangskanal (22) abzweigen;
- einem Umstellelement (10) mit einer Achse (11) und einem daran befestigten ringförmigen oder ringscheibenförmigen Formdichtungselement (15), welches in der Verteilerkammer (26) zwischen einer ersten Position, in der der Einlasskanal (25) mit dem ersten Ausgangskanal (21) verbunden ist, und einer zweiten Position, in der der Einlasskanal (25) mit dem zweiten Ausgangskanal (22) verbunden ist, verschiebbar ist;
- einem Rückstellelement (12) zur Rückführung des Umstellelements (10) in eine Ausgangsposition; und
- einem Lagerelement (13) zur Lagerung der Achse des Umstellelements (10) in dem Gehäuse (20, 30, 40);
**dadurch gekennzeichnet,**
- **dass** das Umstellelement (10) mit der Achse (11), dem Formdichtungselement (15), dem Rückstellelement (12) und dem Lagerelement (13) einteilig aus einem elastomeren Werkstoff ausgebildet ist,
- **dass** das Lagerelement und das Rückstellelement am Umstellelement (10) durch ein die Achse (11) umgebendes Membranelement (12, 13) gebildet sind, das in das Gehäuse (20, 30,40) eingespannt ist, und
- **dass** eine Betätigungsfläche (14) aus dem Gehäuse (20, 30, 40) ragt oder durch eine Öffnung im Gehäuse (20, 30, 40) betätigbar ist.

2. Handbrausenumstelleinheit (100) nach Anspruch 1, **dadurch gekennzeichnet, dass** das Gehäuse (20, 30) wenigstens zweiteilig ausgebildet ist, mit einem Gehäusebasiselement (20) und einem Deckelelement (30), zwischen denen die Verteilerkammer (26) angeordnet ist.

3. Handbrausenumstelleinheit (100) nach Anspruch 2, **dadurch gekennzeichnet, dass** das Membranelement (12, 13) zwischen dem Deckelelement (30) und einem Klemmringelement (40) eingespannt ist.

4. Handbrausenumstelleinheit (100) nach Anspruch 2 oder 3, **dadurch gekennzeichnet, dass** das Membranelement (12, 13) stoffschlüssig an das Deckelelement (30) angebunden ist.

5. Handbrausenumstelleinheit (100) nach wenigstens einem der Ansprüche 1 bis 4, **dadurch gekennzeichnet, dass** das Umstellelement (10) aus einem thermoplastischen Elastomer gebildet ist

6. Handbrausenumstelleinheit (100) nach wenigstens einem der Ansprüche 1 bis 5, **dadurch gekennzeichnet, dass** das Umstellelement (10) an seiner Unterseite eine Zentrieraufnahme (16) aufweist, in die ein Zentrierzapfen am Gehäuse oder an einem damit verbundenen Anbauteil eingreift.

7. Handbrausenumstelleinheit nach wenigstens einem der Ansprüche 1 bis 5, **dadurch gekennzeichnet, dass** das Umstellelement an seiner Unterseite einen Zentrierzapfen aufweist, der in eine Zentrieraufnahme am Gehäuse oder an einem damit verbundenen Anbauteil eingreift.

8. Handbrause mit wenigstens:
- einem Brausengehäuse mit einem Handgriff,
- einer Handbrausenumstelleinheit (100) nach wenigstens einem der vorhergehenden Ansprüche,
- einem von der Außenseite des Brausengehäuses zugänglichen Betätigungselement, das auf die Betätigungsfläche (14) der Handbrausenumstelleinheit (100) wirkt,
- einer Düsenplatte, in der eine Vielzahl von Strahldüsen angeordnet sind,
- sowie einer oberhalb der Düsenplatte ausgebildeten Verteilerkammer, die wenigstens in eine erste Teilkammer, welche mit dem ersten Ausgangskanal (21) der Handbrausenumstelleinheit (100) verbunden ist, und in eine zweite Teilkammer, welche mit dem zweiten Ausgangskanal (22) der Handbrausenumstelleinheit (100) verbunden ist, getrennt ist.

## Claims

1. Hand shower switchover unit (100) for a sanitary or kitchen hand shower, having at least:
- a housing (20, 30, 40) with a distributor chamber (26), into which at least one inlet duct (25) leads and from which at least one first output duct (21) and a second output duct (22) branch;
- a switchover element (10) with a shaft (11) and, attached thereto, an annular or annular-disc shaped gasket element (15) which is displaceable in the distributor chamber (26) between a first position, in which the inlet duct (25) is connected to the first output duct (21), and a second position, in which the inlet duct (25) is connected to the second output duct (22);
- a restoring element (12) for returning the switchover element (10) into a starting position; and
- a bearing element (13) for supporting the shaft of the switchover element (10) in the housing (20, 30, 40);
**characterized**
- **in that** the switchover element (10) with the shaft (11), the gasket element (15), the restoring element (12) and the bearing element (13) is formed integrally from an elastomeric material,
- **in that** the bearing element and the restoring element are formed on the switchover element (10) by a diaphragm element (12, 13) surrounding the shaft (11), said diaphragm element being clamped into the housing (20, 30, 40), and
- **in that** an actuating surface (14) protrudes out of the housing (20, 30, 40) or is actuable through an opening in the housing (20, 30, 40).

2. Hand shower switchover unit (100) according to Claim 1, **characterized in that** the housing (20, 30) is formed at least in two parts, having a housing base element (20) and a cover element (30), between which the distributor chamber (26) is arranged.

3. Hand shower switchover unit (100) according to Claim 2, **characterized in that** the diaphragm element (12, 13) is clamped in between the cover element (30) and a clamping ring element (40).

4. Hand shower switchover unit (100) according to Claim 2 or 3, **characterized in that** the diaphragm element (12, 13) is cohesively attached to the cover element (30).

5. Hand shower switchover unit (100) according to at least one of Claims 1 to 4, **characterized in that** the switchover element (10) is formed from a thermoplastic elastomer.

6. Hand shower switchover unit (100) according to at least one of Claims 1 to 5, **characterized in that** the switchover element (10) has a centring receptacle (16) on its underside, a centring pin on the housing or on an attachment part connected thereto engaging in said centring receptacle (16).

7. Hand shower switchover unit according to at least one of Claims 1 to 5, **characterized in that** the switchover element has a centring pin on its underside, said centring pin engaging in a centring receptacle on the housing or on an attachment part connected thereto.

8. Hand shower having at least:
- a shower housing with a handle,
- a hand shower switchover unit (100) according to at least one of the preceding claims,
- an actuating element which is accessible from the outer side of the shower housing and acts on the actuating surface (14) of the hand shower switchover unit (100),
- a nozzle plate in which a multiplicity of jet nozzles are arranged,
- and a distributor chamber formed above the nozzle plate, said distributor chamber being divided at least into a first subchamber, which is connected to the first output duct (21) of the hand shower switchover unit (100), and into a second subchamber, which is connected to the second output duct (22) of the hand shower switchover unit (100).

## Revendications

1. Unité de conversion de douchette à main (100) pour une douchette sanitaire ou de cuisine, avec au moins:
- un boîtier (20, 30, 40) avec une chambre de répartiteur (26), dans laquelle débouche au moins un canal d'entrée (25) et de laquelle partent au moins un premier canal de sortie (21) et un deuxième canal de sortie (22);
- un élément de conversion (10) avec un axe (11) et un élément d'étanchéité moulé (15) en forme d'anneau ou en forme de disque annulaire, fixé à celui-ci, qui est déplaçable dans la chambre de répartiteur (26) entre une première position, dans laquelle le canal d'entrée (25) est raccordé au premier canal de sortie (21), et une deuxième position, dans laquelle le canal d'entrée (25) est raccordé au deuxième canal de sortie (22);
- un élément de rappel (12) pour le rappel de l'élément de conversion (10) dans une position initiale; et
- un élément de palier (13) pour l'appui de l'axe de l'élément de conversion (10) dans le boîtier (20, 30, 40) ;
**caractérisée en ce que**
- l'élément de conversion (10) est formé en un matériau élastomère, en une seule pièce avec l'axe (11), l'élément d'étanchéité moulé (15), l'élément de rappel (12) et l'élément d'appui (13),
- l'élément d'appui et l'élément de rappel sont formés sur l'élément de conversion (10) par un élément de membrane (12, 13) entourant l'axe (11), qui est serré dans le boîtier (20, 30, 40) et
- une face d'actionnement (14) sort hors du boîtier (20, 30, 40) ou est actionnable à travers une ouverture dans le boîtier (20, 30, 40).

2. Unité de conversion de douchette à main (100) selon la revendication 1, **caractérisée en ce que** le boîtier (20, 30) est réalisé en au moins deux parties, avec un élément de base de boîtier (20) et un élément de couvercle (30), entre lesquels la chambre de répartiteur (26) est disposée.

3. Unité de conversion de douchette à main (100) selon la revendication 2, **caractérisée en ce que** l'élément de membrane (12, 13) est serré entre l'élément de couvercle (30) et un élément de bague de serrage (40).

4. Unité de conversion de douchette à main (100) selon la revendication 2 ou 3, **caractérisée en ce que** l'élément de membrane (12, 13) est relié en continuité de matière à l'élément de couvercle (30).

5. Unité de conversion de douchette à main (100) selon au moins une des revendications 1 à 4, **caractérisée en ce que** l'élément de conversion (10) est formé en un matériau élastomère thermoplastique.

6. Unité de conversion de douchette à main (100) selon au moins une des revendications 1 à 5, **caractérisée en ce que** l'élément de conversion (10) présente sur son côté inférieur un logement de centrage (16), dans lequel s'engage un tourillon de centrage sur le boîtier ou sur une pièce rapportée assemblée à ce dernier.

7. Unité de conversion de douchette à main selon au moins une des revendications 1 à 5, **caractérisée en ce que** l'élément de conversion présente sur son côté inférieur un tourillon de centrage, qui s'engage dans un logement de centrage sur le boîtier ou sur une pièce rapportée assemblée à ce dernier.

8. Douchette à main avec au moins:
- un boîtier de douchette avec une poignée,
- une unité de conversion de douchette à main (100) selon au moins une des revendications précédentes,
- un élément d'actionnement accessible depuis le côté extérieur du boîtier de douchette, qui agit sur la face d'actionnement (14) de l'unité de conversion de douchette à main (100),
- une plaque à ajutages, dans laquelle sont disposés une multiplicité d'ajutages de projection,
- ainsi qu'une chambre de répartiteur formée au-dessus de la plaque à ajutages, qui est divisée au moins en une première chambre partielle, qui est raccordée au premier canal de sortie (21) de l'unité de conversion de douchette à main (100), et une deuxième chambre partielle, qui est raccordée au deuxième canal de sortie (22) de l'unité de conversion de douchette à main (100).
